(19) Europäisches Patentamt
European Patent Office
Office européen des brevets

(11) Publication number: 0 048 117 A2

# (12) EUROPEAN PATENT APPLICATION

(21) Application number: 81304043.3

(22) Date of filing: 04.09.81

(51) Int. Cl.³: C 08 G 18/00
C 09 D 3/72, C 09 D 3/68
C 09 D 3/49, C 08 J 7/04
C 08 F 299/02

(30) Priority: 17.09.80 US 188123
14.08.81 US 292825

(43) Date of publication of application:
24.03.82 Bulletin 82/12

(84) Designated Contracting States:
BE DE FR GB IT NL SE

(71) Applicant: ICI AMERICAS INC
Concord Pike & New Murphy Road
Wilmington Delaware 19897(US)

(72) Inventor: Kuehn, Erich
1807 Floral Drive
Wilmington Delaware 19810(US)

(74) Representative: Wood, Dennis John Cecil et al,
*Imperial Chemical Industries PLC Legal Department:*
Patents Thames House North Millbank
London SW1P 4QG(GB)

(54) **In-mold coating compositions containing a non-isocyanate-reactive unsaturated resin, a non-isocyanate-reactive monomer and a free isocyanate-containing compound.**

(57) Fully cured reinforced molded resins such as polyester, polyurea-urethane, polyurea, polyurethane, polyisocyanurate, polyepoxy and polycarbonate resins can be in-mold coated to cover surface defects such as sink marks and microcracks with an improved coating composition comprising 5-94% by weight of an ethylenically unsaturated base resin free of groups reactive with isocyanate radicals; 5-94% by weight of an ethylenically unsaturated monomer free of groups reactive with isocyanate radicals; and 1-20% by weight of isocyanate-containing compounds or compounds which decompose to form free isocyanate-containing compounds. Such coatings unexpectedly have improved adherence to molded articles over those obtained from similar compositions which contain no free isocyanate. The compositions may contain minor amounts of emulsifiers, fillers, catalysts, cross-linking agents, dryers and pigments. In particular, the coatings obtained when the compositions contain electroconductive fillers can be painted by standard electrostatic paint techniques.

EP 0 048 117 A2

Z/PV 31994/EP 0048117

# IN-MOLD COATING COMPOSITIONS CONTAINING A NON-ISOCYANATE-REACTIVE UNSATURATED RESIN, A NON-ISOCYANATE-REACTIVE MONOMER AND A FREE ISOCYANATE-CONTAINING COMPOUND

This invention relates to molded thermosetting plastic articles and especially fiber reinforced plastic articles; more particularly it relates to coating compositions and methods for applying them to such articles in order to cover surface defects such as sink marks, porous areas, microcracks and open knit lines. The invention is especially directed to stable liquid coating compositions having extended shelf life which can be used as a single system for coating cured compositions, which are particularly useful when applied to molded substrates because of their improved adherence and which can be substituted for a sanding and primer coating operation normally required for such uncoated articles prior to painting.

In-mold coating compositions and methods of application are well-known and in particular are described in British Patent 1,457,935. Such processes require injecting a resin compound mixed with reinforcing fibers, usually glass fibers, in the form of either a sheet molding compound or a bulk molding compound into a shaped mold, compressing the mold to form the desired part, applying heat to cure the resin, opening the mold slightly, injecting a coating composition to fill the space between the substrate and the open mold face, closing the mold slightly to squeeze the coating uniformly over the surface

to a thickness of less than 20 mils, usually from 0.05 - 5 mils, and curing the coating. In the present state of the art, the coating compositions are derived from two-component systems which when mixed begin to polymerize and normally gel within a few hours or days, at which point they become useless as an in-mold coating composition. Furthermore, such two components require exact metering and measuring at the point of their use in order to derive a satisfactory coating having uniform properties and curing times.

The coating compound mentioned in the above-cited British patent is formed by reacting an isocyanate-terminated material, and in some instances an isocyanate, with a material which contains reactive hydrogens in admixture with ethylenically unsaturated resins and ethylenically unsaturated monomers. U.S. Patent 4,210,713 is directed to coating compositions which comprise a urethane modified polymer having at least one acrylate or methacrylate moiety, an alpha, beta-ethylenically unsaturated compound copolymerizable with said acrylate or methacrylate moiety and a photosensitizer. U.S. 4,211,680 is directed to cement compositions which are the products obtained by mixing hydraulic cement, water and organic polyisocyanate and polyol, wherein the organic polyisocyanate is in an amount sufficient to provide an excess of isocyanate groups over the hydroxyl groups in the polyol.

The coating compositions presented hereinafter provide the sheet molder with a single mix composition which has stability for six or more months when stored under normal conditions and requires no accurate mixing of ingredients prior to use as an in-mold coating.

According to the present invention there is

provided an in-mold coating composition comprising:-

(a) 5-94% by weight of an ethylenically unsaturated base resin free from groups which are reactive with an isocyanate, the base resin being selected from vinyl-terminated polyester-urethane resins, vinyl-terminated polyisocyanate resins and ethylenically unsaturated polyester resins as hereinafter defined and blends thereof;

(b) 5-94% by weight of an ethylenically unsaturated monomer free from groups reactive with an isocyanate; and

(c) 1-20% by weight of an organic compound containing free isocyanate groups or an organic compound which can undergo decomposition to form a compound containing free isocyanate groups.

Also according to the present invention there is provided a method of forming a coating upon a compression or injection molded, fully cured reinforced thermoset article by copolymerising in contact with the said article a composition comprising:-

(a) 5-94% by weight of an ethylenically unsaturated base resin free from groups which are reactive with an isocyanate, the resin being selected from vinyl-terminated polyester-urethane resins, vinyl-terminated polyisocyanate resins and ethylenically unsaturated polyester resins as hereinafter defined and blends thereof;

(b) 5-94% by weight of an ethylenically unsaturated monomer free from groups reactive with an isocyanate; and

(c) 1-20% by weight of an organic compound containing a plurality of free isocyanate groups or an organic compound which can undergo decomposition

to form a compound containing a plurality of free isocyanate groups.

Vinyl-terminated polyester-urethane resins which are suitable for use as the base resin component (a) of the composition of the invention are characterised by the following general formula:-

$$C-I-(D-N)_tD-I-C$$

wherein

D is a radical derived from an organic polyol;

N is a radical derived from an unsaturated aliphatic dicarboxylic acid or anhydride thereof;

I is a radical derived from a polyisocyanate;

C is a carbamyl-linked radical derived from a hydroxy-terminated ester of acrylic or methacrylic acid:

t is an integer from 1 to 5.

These vinyl-terminated polyester-urethane resins are preferably prepared as described in U.S. 3,876,726 and 4,213,837 and 4,182,830, by condensing the maleate or fumarate of a polyoxyalkylene derivative of bisphenol A with a polyisocyanate and a hydroxyl-terminated ester of acrylic or methacrylic acid.

The bisphenol A derivatives are prepared by first reacting 1 mole of bisphenol A with from 2 to 20 moles of an alkylene oxide such as ethylene oxide or propylene oxide, and thereafter reacting two moles of the product with 1 mol of the unsaturated aliphatic dicarboxylic acid or anhydride thereof. Instead of bisphenol A itself, substituted derivatives of bisphenol A may be utilized having therein up to two substituents per benzene ring. Especially preferred are derivatives wherein the substituents are chosen from chlorine, bromine, fluorine

and methyl groups in positions ortho to the hydroxyl groups.

In the polyoxyalkylene derivatives of bisphenol A, the phenolic hydrogens are displaced by polyoxyalkylene chains averaging 1-8 oxyalkylene units per chain. Of particular interest are those compositions having 2-16 oxyalkylene units per mole of bisphenol A. Increased flexibility of the cured coating results as the number of oxyalkylene chain units is increased.

Unsaturated dicarboxylic acids and anhydrides which are preferred in preparing derivatives useful in the present combination include, for example, maleic acid or anhydride and fumaric acid. The amount of unsaturated aliphatic dicarboxylic acid or anhydride employed should be such that the molar ratio of alkoxylated bisphenol A to acid or anhydride is from about 2:1 to about 6:5.

Representative polyoxyalkylene bisphenol A derivatives which may be employed include, for example, polyoxypropylene (2) bisphenol A, polyoxyethylene (2.2) bisphenol A, polyoxypropylene (2.2) tetrabromobisphenol A, polyoxypropylene (3) bisphenol A, polyoxypropylene (4) bisphenol A, polyoxypropylene (6) bisphenol A and polyoxypropylene (16) bisphenol A. Corresponding polyoxyethylene and polyoxypropylene derivatives of tetramethylbisphenol A can be included.

In addition to, or in place of, the alkoxylated bisphenol A derivatives described above there may be employed aliphatic diols and triols such as ethylene glycol, propylene glycol, butylene glycol, triethylene glycol, neopentyl glycol and 2,2,4-trimethyl-1,3 pentanediol, hexamethylene glycol, trimethylol propane, glycerine and pentaerythritol.

In preparing the vinyl-terminated polyester-urethane resins, the polyisocyanate may be selected from diisocyanates, triisocyanates and isocyanates having up to about 5 isocyanate groups per mol and/or mixtures thereof. Suitable aliphatic diisocyanates include, for example, methylene-bis(4-cyclohexyl) isocyanate and isophorone diisocyanate. Suitable aromatic diisocyanates include toluene diisocyanate, diphenylmethane 4,4'-diisocyanate, p-phenylene diisocyanate, dichlor-diphenyl-methane diisocyanate, dimethyl-diphenyl-methane diisocyanate, dibenzyl diisocyanate and diphenyl ether diisocyanate. In general, diisocyanates of the formula:

OCN-Ar-X-Ar-NCO

wherein Ar is an aromatic ring and wherein X may be a covalent bond, an alkylene radical containing from 1 to 5 carbon atoms, an oxygen or sulfur atom or a sulfoxide or sulfone group, are useful. Suitable polyfunctional isocyanates having an average isocyanate functionality of more than two, such as polymethylene polyphenylene polyisocyanates, are sold under the trademarks of "RUBINATE" M Polyisocyanate, and "PAPI" 901 Polyisocyanate, and have about 2.4-3 isocyanate groups per mol. Mixtures of diisocyanates and polyisocyanates can also be used. When toluene diisocyanate is used it may consist of a mixture of the 2,4 and 2,6 isomers. The amount of diisocyanate or polyisocyanate employed should be at least two mols per mol of bisphenol A derivative employed.

The hydroxy-terminated esters of acrylic or methacrylic acids which are used to form the vinyl-terminated polyester-urethane resins are prepared by reacting acrylic acid or methacrylic acid with an alkylene oxide selected from the group consisting of ethylene oxide and propylene oxide. The reaction is carried out by methods

that are well known in the art. Representative of the materials which may be employed are, for example, hydroxypropyl methacrylate, hydroxyethyl methacrylate, hydroxyethyl acrylate, hydroxypropyl acrylate, polyoxyethylene(2) acrylate, polyoxyethylene (2) methacrylate, polyoxyethylene(3) acrylate, polyoxyethylene(3) methacrylate, polyoxypropylene(2) acrylate, polyoxypropylene(2) methacrylate, polyoxypropylene(3) acrylate and polyoxypropylene(3) methacrylate.

The amount of the hydroxy-terminated acrylate or methacrylate ester employed should be at least one mol per mol of unreacted isocyanate group in the urethane ester intermediate. Preferred vinyl-terminated polyester-urethane resins are made according to the following examples:

Example A - Vinyl-Terminated Polyester-Urethane Resin

Into a two-liter reaction flask equipped with a stirrer, thermometer, nitrogen inlet tube and distillation head there is charged 4 mols of polyoxypropylene bisphenol A containing an average of 2.2 mols of propylene oxide per mol of bisphenol A and two mols of maleic anhydride. The reaction mixture is heated at from $210^{o}$ to $215^{o}C$ for 5 hours. A vacuum is then applied for 1 hour while maintaining the temperature at $210-215^{o}C$. 1 mol of the resulting diester is reacted by heating to $80^{o}C$, in the presence of 1.44 grams of hydroquinone, with a mixture of two mols of hydroxypropylmethacrylate and two mols of toluene diisocyanate for a period of 1 hour. The reaction mixture is then permitted to rise to a temperature of $135^{o}C$ and is held at that point for 1/2 hour. The resultant light colored solid resin has a melting point of $97^{o}C$, an acid number of 7.6, a saponification number of 201, a hydroxyl number of 22, and contains no residual unreacted

isocyanate. The resin is ground to a white finely divided powder and then dissolved in styrene to form a 50% solids solution.

Example B - Vinyl-Terminated Polyester-Urethane Resin

According to the procedure of Example A, 4 mols of polyoxypropylene bisphenol A, containing an average of 6 mols of propylene oxide per mol of bisphenol A, and two mols of maleic anhydride are reacted and the product condensed with a mixture of two molar equivalents of toluene diisocyanate and two molar equivalents of hydroxyethyl acrylate.

Example C - Vinyl-Terminated Polyester-Urethane Resin

According to the procedure of Example A, polyoxypropylene bisphenol A containing an average of 16 mols of propylene oxide per mol of bisphenol A and maleic anhydride are condensed and the product reacted with a mixture of two molar equivalents of toluene diisocyanate and two molar equivalents of hydroxyethyl acrylate.

Example D - Vinyl-Terminated Polyester-Urethane Resin

According to the procedure of Example A, 1 molar equivalent of polyoxyethylene bisphenol A, having an average of 6 mols of ethylene oxide per mol of bisphenol A and 1 molar equivalent of maleic anhydride are condensed and the product reacted with a mixture of two mols of toluene diisocyanate and two mols of hydroxypropyl methacrylate.

Example E - Vinyl-Terminated Polyester-Urethane Resin

Two molar equivalents of polyoxypropylene bisphenol A, having an average of 6 mols of propylene oxide per mol of bisphenol A, are reacted with 1 molar equivalent of maleic anhydride as described in Example A. 2.7 mols of this diester maleate is then reacted with 1 mol of a commercial polyisocyanate having an average

functionality of 2.7 isocyanate groups per mol (which is a mixture of 4,4'diphenylmethane diisocyanate and other polyisocyanates sold under the trademark "Rubinate" M) together with 2.7 mols hydroxypropyl acrylate until the resin is free of unreacted isocyanate groups.

Example F - Vinyl-Terminated Polyester-Urethane Resin

According to the procedure of Example A, a diester prepared by condensing two moles of hexanediol with one mole of maleic anhydride is thereafter reacted with two moles of toluene diisocyanate and two moles of hydroxyethyl acrylate. The resulting material is dissolved in styrene to prepare a 70% resin-in-monomer solution.

Example G - Vinyl-Terminated Polyester-Urethane Resin

According to the procedure of Example A, two moles of triethylene glycol are condensed with one mole of maleic anhydride and thereafter reacted with two moles of toluene diisocyanate and two moles of hydroxyethyl acrylate. The resulting material is dissolved in styrene to form a 70% resin-in-monomer solution.

Example H - Vinyl-Terminated Polyester-Urethane Resin

According to the procedure of Example A, two moles of neopentylglycol are condensed with one mole of maleic anhydride and thereafter reacted with two moles of toluene diisocyanate and two moles of hydroxyethyl acrylate. The resulting material is dissolved in styrene to form a 70% resin-in-monomer solution.

Example I - Vinyl-Terminated Polyester-Urethane Resin

According to the procedure of Example A, two moles of 2,2,4-trimethyl-1,3-pentanediol are condensed with one mole of maleic anhydride and thereafter condensed with two moles of toluene diisocyanate and two moles of hydroxyethyl acrylate. The resulting material is dissolved

in styrene to form a 70% resin-in-monomer solution.

Of particular interest as vinyl-terminated polyisocyanurate resins which may be employed, instead of the foregoing vinyl-terminated polyester-urethane resins, as the base resin component (a) of the compositions of the invention are those derived from an aromatic polyisocyanate and at least one vinylidene carbonyl oxy alkanol characterized by one of the following formulae:

(1) 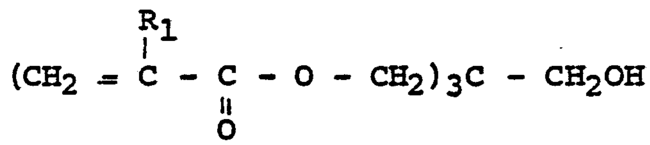

(2) 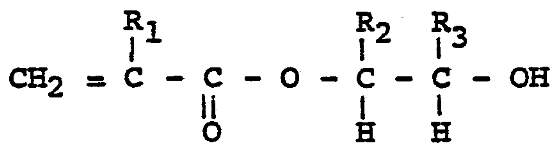

(3) 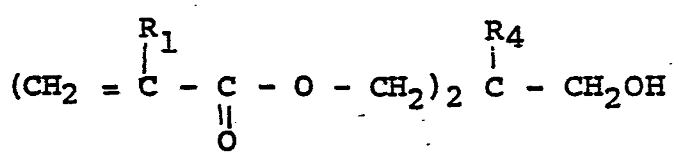

(4) 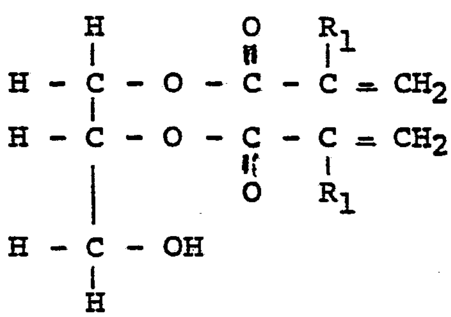

and

(5) 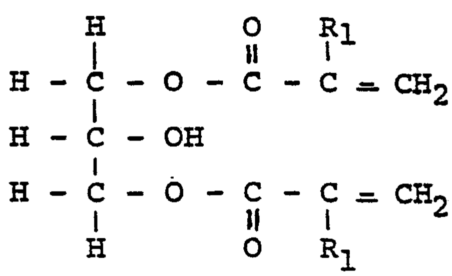

wherein $R_1$ is hydrogen or an alkyl group containing from 1 to 4 carbon atoms; $R_2$ is hydrogen, an alkyl group containing from 1 to 12 carbon atoms, or a chlorinated, brominated, or fluorinated alkyl group containing from 1 to 12 carbon atoms; $R_3$ is hydrogen, an alkyl group containing from 1 to 12 carbon atoms. or a chlorinated, brominated, or fluorinated alkyl group containing from 1 to 12 carbon atoms; $R_4$ is hydrogen or a methyl or ethyl group, and n is an integer from one to four, with the proviso that $R_2$ and $R_3$ on adjacent carbon atoms are not both alkyl groups or chlorinated, brominated or fluorinated alkyl groups, that is to say at least one of $R_2$ and $R_3$ must be hydrogen. In order to obtain compositions having the excellent combination of high temperature physical properties provided by the present invention, it is preferred that the vinyl-terminated polyisocyanurate resin be one wherein at least a major amount of the isocyanurate moieties are based on one or more vinylidene carbonyl oxy alkanols as defined above. Illustrative examples of such alkanols include hydroxypropyl methacrylate, hydroxyethyl methacrylate, hydroxypropyl acrylate, hydroxyethyl acrylate, pentaerythritol triacrylate, pentaerythritol trimethacrylate, and diacrylates and dimethacrylates of trimethylol propane, trimethylol ethane, trimethylol methane, and glycerol. A preferred group of vinylidene carbonyl oxy alkanols includes blends of polyfunctional acrylates or methacrylates such as pentaerythritol triacrylate or pentaerythritol trimethacrylate, and mixtures thereof, with one or more monofunctional acrylates or methacrylates such as hydroxypropyl acrylate or hydroxyethyl methacrylate.

While the vinyl-terminated polyisocyanurates

contain moieties derived from one of the vinylidene carbonyl oxy alkanols defined above, the moieties which they contain derived from an aromatic polyisocyanate may be based on any trimerizable aromatic polyisocyanate which is conventionally used in the art for the preparation of isocyanurates. For example, the aromatic polyisocyanate may or may not contain ethylenic unsaturation and it may be monomeric or polymeric. The only essential requirements are that the aromatic polyisocyanate contain at least two aromatic isocyanate groups, be trimerizable, and be free of any groups which interfere with the trimerization of isocyanate groups or with the reaction of an isocyanate group with a hydroxyl group. Illustrative examples of aromatic polyisocyanates which are particularly useful in the preparation of isocyanurate compositions of this invention include: 2,4-tolylene diisocyanate; 2,6-tolylene diisocyanate; m-phenylene diisocyanate; p-phenylene diisocyanate; 1,5-naphthalene diisocyanate; 4,4'-diphenyl ether diisocyanate; 4,4',4"-triphenylmethane triisocyanate; 2,4,4'-triisocyanatodiphenylmethane; 2,2',4-triisocyanato diphenyl; 4,4'-diphenylmethane diisocyanate; 4,4'-benzophenone diisocyanate; 2,2-bis(4-isocyanatophenyl)-propane; 1,4-naphthalene diisocyanate; 4-methoxy-1,3-phenylene diisocyanate; 4-chloro-1,3-phenylenediisocyanate; 4-bromo-1,3-phenylene diisocyanate; 4-ethoxy-1,3-phenylene diisocyanate; 2,4'-diisocyanatodiphenyl ether; 4,4'-diisocyanatodiphenyl; 9,10-anthracene diisocyanate; 4,6-dimethyl-1,3-phenylene diisocyanate; 4,4'-diisocyanatodibenzyl; 3,3'-dimethyl-4,4'-diisocyanatodiphenylmethane; 3,3'-dimethyl-4,4'-diisocyanatodiphenyl; 3,3'-dimethoxy-4,4'-diisocyanatodiphenyl; 1,8-naphthalene diisocyanate; 2,4,6-tolylene triisocyanate; 2,4,4'-triisocyanatodiphenyl ether, diphenylmethane diisocyanate; polymethylene polyphenylene polyisocyanates available under the trademarks "Rubinate" M and "Papi", having a functionality of from 2.1 to 2.7; 1,3-xylene 4,6-diisocyanate; aromatic isocyanate-terminated polyurethanes; and aromatic isocyanate-terminated pre-polymers of polyesters. Although it is preferred to use all aromatic polyisocyanate, small amounts of an aliphatic polyisocyanate, for example, 1,6-hexamethylene diisocyanate, isophorone diisocyanate, or alpha,alpha'-diisocyanato-p-xylene, may be used in combination with the aromatic polyisocyanate.

The vinyl-terminated polyisocyanurate base resins are prepared by reacting an aromatic polyisocyanate with one or more of the above-described vinylidene hydroxy compounds to form an isocyanate-containing urethane, followed by trimerization of the isocyanate groups to form the ethylenically unsaturated polyisocyanurate resin. The NCO/OH mol ratio in the reaction mix is maintained at a range at from 0.75 to 1.6 and preferably from about 0.9 to about 1.4. When the reaction is carried out in equal parts of an inert solvent and the reactants are hydroxypropyl methacrylate and toluene diisocyanate, the preferred molar ratio for sheet molding applications ranges from 0.95 to about 1.05.

In carrying out the trimerization reaction, the temperature must be maintained such that the vinylidene group does not undergo the addition polymerization prematurely. Usually the reaction is carried out in a range of $0^{o}$ to about $95^{o}C$.

Up to about 49 mol percent of the vinylidene carbonyl oxy alkanol described in the list above may be

replaced with a monohydric alcohol selected from methanol, ethanol, propanol, butanol, isobutanol, octyl alcohol, cyclohexanol, benzyl alcohol, allyl alcohol, glycerol diallyl ether, trimethylolpropane diallyl ether, saturated halogenated alcohols, halogenated alcohols containing ethylenic unsaturation, for example, dibromoneopentyl glycol monoacrylate and monomethacrylate, halogenated allyl alcohols, monohydric alcohols such as 2-bromo ethanol, 3-bromo-1-propanol, 4-chloro-1-butanol, 2-chloroethanol, 4-chloro-1-hexanol, 3-chloro-1-propanol, 2,3-dibromo-1-propanol, 2,3-di-chloro-1-propanol, 2,2,2-trichloroethanol, 1-bromo-2-propanol, 1-chloro-2-propanol, 1,3-dibromo-2-propanol, and 1,3-dichloro-2-propanol, mono acrylate and mono methacrylate esters of alkoxylated bisphenol A and alkoxylated tetrabromobisphenol A, and polyoxyethylene and polyoxypropylene ethers of monohydric phenols.

Illustrative examples of dihydric alcohols which may be used to replace up to 33 mol percent, and preferably up to 10 mol percent, of the vinylidene carbonyl oxy alkanols described include : ethylene glycol, propylene glycol, polyethylene glycol, polypropylene glycol, compounds characterized by the formula:

$$(R_1O)_2\overset{O}{\overset{\|}{P}}CH_2N(CH_2CH_2OH)_2$$

wherein $R_1$ is an alkyl group containing from 1 to 4 carbon atoms, 1,4-butane diol, pentamethylene glycol, hexamethylene glycol, glycerol methyl ether, polyoxyethylene and polyoxypropylene ethers of dihydric phenols such as bisphenol A, glycerol monochlorohydrin, glyceryl monostearate, dihydroxy acetone, and monoesters of the above

polyols and acrylic acid or methacrylic acid.

When the isocyanurates are prepared in the absence of solvent, the product formed is a solid and requires special processing which permits the easy removal of the heat generated by the reaction and which prevents the reaction mixture from reaching high temperatures which may induce insolubility and gelation of the products. Among the special processing techniques which may be used is the trimerization of the monourethane in thin layers on moving temperature-controlled belts or in temperature-controlled trays.

Suitable catalysts for carrying out the urethane formation step of the above process in addition to copper salt, are : organo-metallic compounds of tin, zinc, lead, mercury, cadmium, bismuth, cobalt, manganese, antimony, iron and the like such as, for example, metal salts of carboxylic acids having from about 2 to about 20 carbon atoms including for example stannous octoate, dibutyl tin dilaurate, dibutyl tin diacetate, ferric acetyl acetonate, lead octoate, lead oleate, cobalt naphthanate, lead naphthanate and mixtures thereof. It is preferred that the catalysts be employed in liquid form. Those catalysts which are not ordinarily liquids may be added as a solution in solvent. It is best to carry out the urethane reaction in the absence of a trimerization catalyst in order to reduce premature thickening.

The subsequent trimerization of the isocyanate groups is usually carried out in the presence of such catalysts as tertiary amines, organic quaternary ammonium hydroxide compounds, diones, metallic salts of carboxylic acids, alkoxides or phenoxides of alkali or alkaline earth metals, organic phosphines and organo-metallic

compounds of tin or antimony. The catalyst concentration in the reaction may range from 0.01 - 3.0% based on the total weight of the resin.

A typical vinyl-terminated polyisocyanurate resin can be prepared by the following technique.

Example J

Into a chemical reactor equipped with agitator, condenser, gas pipe connections, vents, and portholes which is first flushed with nitrogen and thereafter sparged with 2 cfm. air and 6 cfm. nitrogen, there is charged 2,680 parts of hydroxypropyl methacrylate and this is agitated at 30 revolutions per minute. Thereafter, 2.5 parts of copper acetate catalyst, 12 parts of a 20% solution of t-butyl catechol and 5,743 parts of styrene are charged to the reactor. The contents of the reactor are heated to $42^{\circ} \pm 2^{\circ}C$ and thereafter sparged with 3-4 cfm. nitrogen. Under increased agitation at 50-60 revolutions per minute, 3,064 parts of toluene diisocyanate is added at a rate of 60-70 parts per minute in four 766-part portions. After the first 766-part portion is added, the temperature of the mixture is permitted to rise to $65^{\circ}C$. After the second portion, the temperature is permitted to rise to $78^{\circ}C$. After the third portion, the temperature is permitted to rise to $90^{\circ}C$ and after the fourth portion, the temperature is permitted to stay for one additional hour at $90^{\circ}C$, at which time the unreacted isocyanate content should be less than 4.5%. The reaction mix is cooled to $55^{\circ}C$ and is then mixed with 18 parts N-benzyl trimethyl ammonium hydroxide as a 40% methanol solution.

The exothermic trimerization reaction thereupon takes place and cooling is required to ensure that the reaction mixture temperature does not go above $60^{\circ}C$. The reaction is permitted to continue until the unreacted isocyanate

content ranges between 0.05 - 0.15% and the viscosity ranges between 425-475 cps. At this point, 6 parts of methanesulphonic acid is added to inhibit the activity of the trimerization catalyst. The styrene solution of vinyl-terminated polyisocyanurate resin which is thus obtained is stored for later use under conditions which inhibit further polymerization.

The reaction product has a number average molecular weight of about 1160, a weight average molecular weight of about 2000, and a polydispersity of about 1.9 About 95% of the isocyanurates present have a molecular weight of below about 5200 and some below about 26,000. This product corresponds to a resin where the number of isocyanurate rings in most of the isocyanurate molecules is less than 10. The product has a ball and ring melting point of about 95°C and a viscosity (in 50% styrene solution) of about 400-600 cps at 25°C, and a refractive index of about 1.557 $ND^{20}$. The infra-red spectrum of this product shows absorption bands characteristic of isocyanurates and the essential absence of isocyanate functionality. The hydroxyl number of the product is essentially zero.

Example K

This example illustrates the preparation of an allophanate-free resin containing a large amount of isocyanate.

A small reaction vessel is charged with 100 g. of a resin prepared according to Example J, which by NMR analysis had an allophanate to urethane ratio of 0.45. 0.4 ml of Triton B (40% solution of benzyltrimethylammonium hydroxide in methanol) is added and 0.5 ml of a 10% solution of equal amounts of t-butylcatechol and the

monomethyl ether of hydroquinone. The resulting mixture is heated for 1-1/2 hours at 95°C. The final product is free of all detectable allophanate linkages upon NMR analysis.

Tractable shaped articles capable of being further shaped having from 5-95% by weight ethylenically unsaturated polyisocyanurate resin having 1-3 vinylidene groups per isocyanurate ring or its equivalent in a solution with at least one ethylenically unsaturated monomer which will react with ethylenically unsaturated groups in the isocyanurate resin can be made by thickening a homogenous mixture of polyisocyanurate resin/ethylenically unsaturated monomer solution with polyurethane made in solution therewith by reacting an aromatic polyisocyanate having 2-5 isocyanate groups per mol with a polyol having a molecular weight of about 300-2,000 and wherein the mol ratio of the total hydroxyl groups to isocyanate groups in the reaction mix is held between 0.66 and 0.95.

Ethylenically unsaturated polyester resins which are, as a further alternative, suitable for use as the base resin component (a) of the compositions of the invention may be obtained, for example, by esterification of an unsaturated dicarboxylic acid, or a mixture of such acids, with a saturated diol or a mixture of such diols, or by esterification of a saturated dicarboxylic acid with one or more unsaturated diols. If desired one or more unsaturated acid or acids may be used together with or in place of the saturated acid or acids, and one or more unsaturated diol or diols may be used together with or in place of the saturated diol or diols. Where possible, an anhydride may be used in place of the corresponding dicarboxylic acid. One or more carboxylic acids of

functionality greater than two may be used together with or in place of one or more of the dicarboxylic acids. Similarly, one or more polyols of functionality greater than two may be used together with or in place of one or more of the diols.

Examples of suitable ethylenically unsaturated polyesters include, for example, those formed by esterification of maleic acid or anhydride, fumaric acid, or itaconic acid or mixtures thereof with, for example, ethylene glycol, propylene glycol, butane-1,4-diol, pentane-1,5-diol, cyclohexane-1,4-diol, glycerol, trimethylolpropane or neopentyl glycol or mixtures thereof. Suitable saturated acids which may also be incorporated into the above-described ethylenically unsaturated polyesters include, for example, phthalic acid or anhydride, isophthalic acid, terephthalic acid, adipic acid, sebacic acid, glutaric acid or pimelic acid or mixtures thereof. Examples of suitable ethylenically unsaturated polyesters which may be mentioned in particular include a condensate of isophthalic acid and fumaric acid with propylene glycol, a condensate of phthalic acid or anhydride and fumaric acid with propylene glycol, cyclohexane-1,4-diol or neopentyl glycol, and a condensate of propylene glycol with either fumaric acid or a mixture of phthalic acid or anhydride and maleic acid or anhydride.

Examples of ethylenically unsaturated monomers free from groups reactive with an isocyanate, which are suitable for use as component (b) of the compositions of the invention, include, for example, vinyl esters, aromatic vinyl compounds and vinyl nitriles. Suitable vinyl esters include, for example, vinyl acetate and esters of acrylic acid or methacrylic acid having the

formula $CH_2 = CR\text{-}COOR'$, where R is hydrogen or methyl and R' is an alkyl, aryl, alkaryl, aralkyl or cycloalkyl group. For example, R' may be an alkyl group having from 1 to 20, and preferably from 1 to 10, carbon atoms. Particular vinyl esters which may be mentioned include, for example, methyl methacrylate, ethyl methacrylate, n- and iso-propyl methacrylate, and n-, iso- and tertiary-butyl methacrylate, butyl acrylate, 2-ethylhexyl acrylate and glycidyl acrylate.

Aromatic vinyl compounds which may be mentioned include, for example, styrene and derivatives thereof, e.g. α-alkyl derivatives of styrene, e.g. α-methyl styrene, and vinyl toluene.

Suitable vinyl nitriles include, for example, acrylonitrile and derivatives thereof, e.g. methacrylonitrile.

Polyfunctional vinyl monomers, that is to say monomers containing two or more vinyl groups, are also suitable. Suitable such monomers include, for example, glycol dimethacrylate, hexanediol diacrylate, neopentyl diol diacrylate, pentaerythritol triacrylate, trimethylolpropane triacrylate, divinyl benzene and diallyl phthalate.

As component (c) of the compositions of the invention there is employed a polyisocyanate, which may be aliphatic, cycloaliphatic or aromatic or may contain, in the same polyisocyanate molecule, aliphatic and aromatic isocyanate groups, aliphatic and cyclo-aliphatic and aromatic isocyanate groups, aliphatic and cyclo-aliphatic isocyanate groups or cyclo-aliphatic and aromatic isocyanate groups. If desired, mixtures of two or more different polyisocyanates may be employed. Suitable polyisocyanates include methylene-bis(4-cyclohexyl)isocyanate, isophorone diisocyanate, 1,3-phenylene

diisocyanate, 1,4-phenylene diisocyanate, 4-methoxy-1, 3-phenylene diisocyanate, 4-ethoxy-1,3-phenylene diisocyanate, 4,6-dimethyl-1,3-phenylene diisocyanate, 4-chloro-1,3-phenylene diisocyanate, 4-bromo-1, 3-phenylene diisocyanate, 2,4-tolylene diisocyanate, 2,6-tolylene diisocyanate, 1,3-xylene-4,6-diisocyanate, 2,4'-diphenylether diisocyanate, 4,4'-diphenylether diisocyanate, 4,4'-diphenylmethane diisocyanate, dichlorodiphenylmethane diisocyanate, 4,4'-diisocyanatodiphenyl, 3,3'-dimethyl-4,4'-diisocyanatodiphenyl, 3,3'-dimethoxy-4,4'-diisocyanatodiphenyl, 4,4'-benzophenone diisocyanate, 2,2'-bis(4-isocyanatophenyl)propane, 4,4'-diisocyanatodibenzyl, 1,4'-naphthalene diisocyanate, 1,5-naphthalene diisocyanate, 1,8-naphthalene diisocyanate, 9,10-anthracene diisocyanate, 2,4,6-tolylene triisocyanate, 2,4,4'-triisocyanatodiphenylmethane, 2,4,4'-triisocyanatodiphenylether, 4,4',4"-triphenylmethane triisocyanate, 2,2,4'-triisocyanatodiphenyl, and polymethylenepolyphenyl polyisocyanates.

In addition to such polyisocyanates, there may also be considered for use blocked or masked isocyanates which are substituted urethane products which undergo decomposition at temperatures ranging from about 150°-200°C and above to form a polyisocyanate and unreacted by-product. Such blocked polyisocyanates may be used in the presence of a catalyst which causes them to decompose to form free polyisocyanates at a temperature lower than about 125°.

In addition to the polyisocyanates and blocked polyisocyanates, there may be employed -NCO-terminated prepolymers which may or may not have ethylenic unsaturation and which may be able to undergo polymerization

with the ethylenically unsaturated monomer. Such combinations are derived from polyhydroxy-terminated polyols, polyethers and polyesters which may contain ethylenic unsaturation.

In bringing about the curing of the compositions of the invention, reaction between the ethylenically unsaturated base resin and the monomer is usually activated by the presence of a catalyst, for example, a peroxide such as benzoyl peroxide, cyclohexanone peroxide, ditertiary butyl peroxide, dicumyl peroxide, tert-butyl peroctoate, tert-butyl perbenzoate, 1,1-bis(tert-butylperoxy)-cyclohexane, 1,1-bis(tert-butylperoxy)-3,3,5-trimethylcyclohexane and 2,5-dimethyl-2,5-bis(2-ethylhexanoylperoxy)hexane.

Some of these catalysts react at low temperatures to initiate free radicals, while others are activated at high temperatures in the presence of an accelerator, such as a dilute solution of cobalt soap or an amine. The selection of the free-radical catalyst is important if one is to control the time at which the addition polymerization takes place. It is contemplated that light-activated free-radical catalysts may also be used if lower temperatures are preferred. In the performance of the present invention, it is preferred that the addition polymerization between the base resin and the ethylenically unsaturated monomer takes place within the mold at the temperature of the mold.

The coating compositions of the invention are homogeneous mixtures of the above-described components and minor amounts of other ingredients. Preferred coatings contain 20-80% by weight of the ethylenically unsaturated base resins selected from vinyl-terminated

polyester-urethane resins, vinyl-terminated polyisocyanurate resins and ethylenically unsaturated polyesters as hereinbefore defined; 30-60% by weight of ethylenically unsaturated monomers free from groups reactive with isocyanate groups; and 2-15% by weight of polyisocyanate. In addition to these components, the blends may contain antioxidants, mold release agents, adhesion promotors, pigments, fillers, dispersing agents and catalysts.

A translucent coating is made by blending the base resin, the ethylenically unsaturated monomer and polyisocyanate along with antioxidants, mold release agents and free radical type initiator catalysts. However, most desirable coating compositions contain coloring agents, pigments and fillers which form an opaque or a single colored surface. Of particular interest are those compositions which contain conductive pigments such as electroconductive carbon black pigments which provide a surface which can be painted by electrostatic techniques.

The coating compositions containing free isocyanate must be stored under preferably air-tight and light-free conditions in order to prevent premature decomposition resulting from either reaction of isocyanate with moisture or premature addition polymerization of the unsaturated materials.

By use of the compositions of the invention, there may be obtained compression or injection molded, fully cured, reinforced thermoset articles having a compression or injection molded coating which exhibits superior smoothness, adherence and durability to coatings derived from similar compositions which contain no free isocyanate. The articles in question may be derived from molding resins such as polyesters, polyurea-urethanes,

polyureas, polyurethanes, polyisocyanurates, polyepoxies and polycarbonates.

The coating compositions can be cured in contact with fully cured sheet molding compositions, but are not limited to those shown in the following general example:

PROCEDURE FOR COATING POLYESTER SHEET MOLDING COMPOUNDS.

Into a 12" x 12" flat mold is placed a gel pancake made essentially according to the following procedure:

4,000 parts of a 65% solution of unsaturated polyester in styrene, the polyester being essentially polypropylene fumarate (sold by Rohm and Haas under the mark "PARAPLEX" P340); 3,240 parts of a 35% solution of polymethylmethacrylate in styrene (sold by Rohm and Haas under the mark "PARAPLEX" P681); 772 parts of 35% solution of polymethylmethacrylate in styrene ("PARAPLEX" P543); 10,522 parts of calcium carbonate filler ("Camel Wite"); 70 parts of tertiary-butyl perbenzoate catalyst; 350 parts of zinc stearate; 316 parts of magnesium hydroxide thickener; and 7,830 parts of glass fibers. This is molded into a sheet having a thickness of 1/4 inch, at a temperature of 135-150$^{\circ}$ under a pressure of 400 psi. After two minutes the mold is opened and 5-10 grams of peroxide-catalyzed coating composition as described in Tables I through V are added from a syringe or automatically. The mold is closed under 400 pounds of pressure and after two minutes the coating is cured over the SMC part and thereafter the molded part is taken from the mold.

After a 24-hour conditioning at room temperature, the coatings are tested for adhesion to the substrate according to a procedure outlined in the American Society for Testing Materials Test ASTM D-3359-74, otherwise

referred to as the cross-cut tape test. Test results appear in Tables I-V. Another adhesion test (referred to in the industry as the GM "X" test, developed by the General Motors Corporation) is conducted by cutting with a razor blade a straight line from the upper left corner of a panel to the lower right corner and another from the upper right to the lower left corner through the coating to the substrate. Over this cross-cut is placed Scotch brand reinforced acetate number 710 adhesive tape which is applied under thumb pressure and thereafter removed by pulling swiftly. The removal of coating on the tape is measured visually and rated 0-10. A rating of 10 is awarded when no coating is removed, while a rating of 0 is awarded when all coating is removed. This rating appears for examples listed in Tables I through V. Results of these tests indicate in the following tables that controls employing no polyisocyanate in the coating formulation have very poor adhesion when compared with those that employ polyisocyanate or blocked polyisocyanate.

Example 1

A coating formulation is formed by mixing with agitation 66 parts of a 50% styrene solution containing a vinyl maleate urethane as made in Example A; 0.38 parts of a 10% tertiary butyl catechol/styrene solution; 0.75 part of "Zelec" UN mold release agent; 0.2 part "Anti Terra" U80 pigment wetting agent; 6.67 parts of styrene; 1 part "Cabosil" M5 colloidal silica; 0.8 part of "Sterling" R non-conductive carbon black pigment; 8.0 parts of titanium dioxide pigment; 11.2 parts of "Nytal" 300 magnesium silicate filler.

One hundred parts of this blend are mixed with one part of USP 400 P (a 75% solution of 1,1-bis-(t-butyl-

peroxy)cyclohexane in 25% phthalic plasticizer) and 5 parts of "Rubinate" M (a crude polyphenylmethane polyisocyanate having 2.7 isocyanate groups per mol). About 10 grams of this blend is injected into an open mold containing the magnesium oxide cross-linked polyester resin as described in the general preparation above, the mold is closed at a pressure of 600 psi and held for 60 seconds at 150°C. The mold is opened, the coated part is permitted to age at room temperature for 24 hours and the adhesion tests mentioned above are applied. Results of these tests are compared with Control A made by combining the above-described components in the same proportions except for the inclusion of 7.0 parts of a polyamine-terminated polymer (sold under the mark "Hycar" 1300-16) in place of the isocyanate. The adhesion tests indicate a score of 5 for the Example 1 material while a score of 0 is obtained for Control A, as shown in Table I.

Examples 2-3

A coating composition is made by blending 60 parts of a vinyl maleate urethane resin as shown in Example B in 30% styrene; 0.28 part of a 10% solution of hydroquinone in acetone; 0.6 part of "Zelec" UN mold release agent; 22.84 parts of styrene; 0.8 part of "Aerosil" R-972 colloidal silica; 1 part of "Sylosiv" 120 zeolite molecular sieve; 0.64 part of "Sterling" R non-conductive carbon black pigment; 6.44 parts of titanium dioxide; 3.38 parts of "Nytal" 300 magnesium silicate; 4.02 parts of a 10% solution of lecithin in styrene. One hundred parts of this blend is mixed with 1 part of USP 400 P peroxide catalyst and 2 or 5 parts of "Rubinate" M polyisocyanate as shown in Table I. Control B and Control C are made with similar compositions wherein no polyisocyanate is added. Ten grams of each solution is placed in a mold as described for Example 1. Adhesion tests are shown in Table I.

Examples 4 and 5

Coating compositions are made according to Examples 2 and 3, with the exception that 17.84 parts of styrene and 5.0 parts of trimethylolpropane triacrylate cross-linker are included in the formulation. One hundred parts of this mixture is combined with one part of USP 400 P peroxide catalyst, together with zero parts of "Rubinate" M polyisocyanate for Control C and varying quantities of "Rubinate" M as shown in Table I. The coatings are applied to polyester panels as described in Example 1.

Examples 6, 7 and 8

A coating formulation is made by blending 70 parts of a 50% styrene solution containing vinyl maleate urethane base resin as described in Example A; 0.38 part of 10% hydroquinone in acetone solution; 4 parts of 10% lecithin in styrene solution; 0.2 part of "Aerosil" R-972 colloidal silica; 1 part of "Sylvosiv" 120 zeolite molecular sieve; 2 parts of CX-72R electroconductive carbon black pigment; 12.19 parts of "Nytal" 300 magnesium silicate filler; and 10.23 parts of styrene. This material has a viscosity of 1074 centipoise at room temperature. One hundred parts of this blend is mixed with 1 part of USP 400 P peroxide catalyst and varying quantities of "Rubinate" M polyisocyanate and molded as described in Example 1. Results of adhesion tests are shown in Table II. Control D with no polyisocyanate added has very poor adhesion.

Examples 9, 10 and 11

Coating compositions are prepared according to Examples 6 through 8 with the exception that 60 parts of the resin of Example A and 5.23 parts of styrene are employed, with the addition thereto of 15.0 parts of "Kelpoxy" G-270-100 (an epoxy modified polybutadiene/ acrylonitrile copolymer) thereby increasing the viscosity of the coating to 1,444 centipoises at room temperature. To this is added 1 part of USP-400-P peroxide catalyst and varying quantities of "Rubinate" M polyisocyanate as shown in Table II The coatings are applied according to the procedure of Example 1. Results of adhesion tests are provided in Table II. Control E containing no polyisocyanate has poor adhesion.

Example 12

A coating formulation containing 60 parts of the product of Example A; 15 parts of "Kelpoxy" G 272-100 epoxy copolymer; 0.38 part of a 10% solution of hydroquinone in acetone; 4 parts of a 10% lecithin solution in styrene; 0.2 part of "Aerosil" R-972 colloidal silica; 1.0 part of "Sylvosiv" 120 zeolite molecular sieve; 2.0 parts of CX72R electroconductive carbon black pigment; 12.19 parts of "Nytal" 300 magnesium silicate filler; 5.23 parts of styrene; 1 part of USP-400 P peroxide catalyst; and 8 parts of a 70% solution in styrene of an -NCO-terminated prepolymer made by reacting 1 mol maleic anhydride and 2 mols polyoxyethylene (16) bisphenol A with 2 mols toluene diisocyanate, is applied to a substrate as described in Example 1 and tested for adhesion. Adhesion test results are listed in Table II.

Examples 13 and 14

Two formulations each containing 60 parts of a 50% styrene solution of a vinyl-terminated polyisocyanurate base resin made according to Example J; 10 and 20 parts respectively of "Kelpoxy" G-272-100 epoxy copolymer; 0.38 part of a 10% solution of hydroquinone in acetone; 4 parts of a 10% solution of lecithin in styrene; 0.2 part of "Aerosil" R-972 colloidal silica; 1 part of "Sylvosiv" 120 zeolite molecular sieve; 2 parts of CX-72R electroconductive carbon black pigment; 12.19 parts of "Nytal" 300 magnesium silicate filler; and 10.23 and 0.23 parts styrene respectively, are made up to give coatings having viscosities of 950 centipoises and 6,200 centipoises respectively. Before molding, 1 part of USP-400-P peroxide catalyst is added to each blend together with five parts of polyisocyanate. These solutions are coated according to the procedure outlined in Example 1 and adhesion tests are carried out, the results of which are tabulated in Table III. Controls F and G are formulated similarly but these contain no added polyisocyanate; they show poor adhesion.

Examples 15, 16 and 17

Coating formulations are made by mixing 60 parts of a 50% styrene solution of the vinyl maleate urethane base resin of Example B; 0.38 part of a 10% hydroquinone solution in acetone; 4.0 parts of a 10% lecithin solution in styrene; 0.2 part of "Aerosil" R-972 colloidal silica; 1 part of "Sylvosiv" 120 zeolite molecular sieve; 2.0 parts of CX-72R electroconductive carbon black pigment; 12.19 parts of "Nytal" 300 magnesium silicate filler; 3,0 parts of trimethylolpropane triacrylate; and 17.23 parts of styrene. The resulting solution has a viscosity of 1,454 centipoises. To this before molding are added 1 part of

USP-400-P peroxide catalyst and varying quantities of "Rubinate" M polyisocyanate as shown in Table III. The coatings are applied according to the procedure of Example 1. Results of adhesion tests are shown in Table III. Control H containing no added polyisocyanate has poor adhesion.

Examples 18, 19 and 20

The coating formula of Examples 15-17 is repeated, with the exception that 70 parts of the vinyl maleate urethane resin of Example B and 7.23 parts of styrene are employed, to give a coating having a viscosity of 6,470 centipoises. The coatings are applied according to the procedure outlined in Example 1, using varying quantities of isocyanate as shown in Table IV. Results of adhesion tests are shown in Table IV.

Examples 21, 22 and 23

The formulation described for Examples 18, 19 and 20 is reproduced, with the exception that 5 parts of trimethylolpropane triacrylate and 5.23 parts of styrene are employed to produce a coating having a viscosity of 7,500 centipoises. The coatings are applied as described in Example 1 with varying quantities of "Rubinate" M polyisocyanate as shown in Table IV. Results of adhesion tests are shown in Table IV.

Examples 24, 25 and 26

A coating composition is prepared according to Examples 21, 22 and 23, with the exception that 60 parts of the base resin of Example B and an additional 10 parts of "Kelpoxy" G-272-100 epoxy copolymer are added to produce a formula having a viscosity of 14,720 centipoise. This material is applied as described in Example 1, with

varying amounts of "Rubinate" M polyisocyanate employed in the formula, and tested for adhesion as shown in Table V.

Examples 27, 28 and 29

Three formulations are made by intermixing 60 parts, 60 parts and 77.23 parts respectively of the 50% vinylmaleate urethane base resin prepared according to Example B; 15, 15 and 10 parts respectively of "Kelpoxy" G-272-100 epoxy copolymer; 0.38 part of a 10% hydroquinone solution in acetone; 4 parts of a 10% lecithin solution in styrene; 0.2 part of "Aerosil" R-972 colloidal silica; 1 part of "Sylvosiv" 120 zeolite molecular sieve; 2 parts of CX-72R electroconductive carbon black pigment; 12.19 parts of "Nytal" 300 magnesium silicate filler; 3, 3 and 5 parts respectively of trimethylolpropane triacrylate; and 17.23, 5.23 and 5.23 parts respectively of styrene. To 100 parts of each of these formulas was added 1 part of USP-400-P peroxide catalyst and varying quantities of diisocyanate compositions made as follows:

Diisocyanate B - a 70% by weight solution in styrene of a diisocyanate made by reacting 1 mol of maleic anhydride with two mols of polyoxypropylene (2) bisphenol A and thereafter with two mols of toluene diisocyanate;

Diisocyanate C - a 70% by weight solution in styrene of a diisocyanate prepared by reacting 1 mol of maleic anhydride with two mols of polyoxypropylene (6) bisphenol A and two mols of toluene diisocyanate;

Isocyanate D - an 80% solution in styrene of a commercially available blocked isocyanate manufactured by Cargill Inc. and marketed as Blocked Isocyanate 2450.

The formulations are coated as described in Example 1, with the results of the adhesion tests being shown in Table V.

From the results of the adhesion tests it will be seen that only small amounts of a polyisocyanate improve the adhesion of the coating compositions to the substrate. These results are surprising since no known reaction can take place between the polymerizing ingredients and the isocyanate in the improved formulation.

## Table I

| | | | | | | | | |
|---|---|---|---|---|---|---|---|---|
| Example No. | | 1 | | 2 | 3 | | 4 | 5 |
| Control No. | A | | B | | | C | | |
| "Rubinate" M (pts/100) | 0 | 5 | 0 | 2 | 5 | 0 | 2 | 5 |
| ADHESION TEST | | | | | | | | |
| ASTM D3359-74 | 0 | 5 | 4 | 5 | 5 | 3 | 5 | 5 |

## Table II

| | | | | | | | | | |
|---|---|---|---|---|---|---|---|---|---|
| Example No. | | 6 | 7 | 8 | | 9 | 10 | 11 | 12 |
| Control No. | D | | | | E | | | | |
| "Rubinate" M (pts/100) | 0 | 2 | 3 | 5 | 0 | 2 | 3 | 5 | |
| Diisocyanate A | | | | | | | | | 8 |
| ADHESION TEST | | | | | | | | | |
| ASTM D3359-74 | 0 | 1 | 2 | 4 | 3 | 4 | 4 | 4 | 5 |
| GM "X" Test | 0 | 8 | 10 | 10 | 8 | 10 | 10 | 10 | 10 |

## Table III

| | | | | | | | | |
|---|---|---|---|---|---|---|---|---|
| Example No. | | 13 | | 14 | | 15 | 16 | 17 |
| Control No. | F | | G | | H | | | |
| "Rubinate" M (pts/100) | 0 | 5 | 0 | 5 | 0 | 2 | 3 | 5 |
| ADHESION TEST | | | | | | | | |
| ASTM D3359-74 | 0 | 3 | 0 | 5 | 0 | 3 | 5 | 5 |
| GM "X" Test | 0 | 9 | 0 | 10 | 0 | 10 | 10 | 10 |

Table IV

| | | | | | | | | |
|---|---|---|---|---|---|---|---|---|
| Example No. | | 18 | 19 | 20 | | 21 | 22 | 23 |
| Control No. | I | | | | J | | | |
| "Rubinate" M (pts/100) | 0 | 2 | 3 | 5 | 0 | 2 | 3 | 5 |
| ADHESION TEST | | | | | | | | |
| ASTM D3359-74 | 0 | 5 | 5 | 5 | 0 | 2 | 5 | 5 |
| GM "X" Test | 0 | 10 | 10 | 10 | 0 | 8 | 10 | 10 |

Table V

| | | | | | | | |
|---|---|---|---|---|---|---|---|
| Example No. | | 24 | 25 | 26 | 27 | 28 | 29 |
| Control No. | K | | | | | | |
| "Rubinate" M (pts/100) | | 2 | 3 | 5 | | | |
| Diisocyanate B (pts/100) | 0 | | | | | | |
| " C | 0 | | | | 10 | 10 | |
| Isocyanate - D | 0 | | | | | | 7 |
| ADHESION TEST | | | | | | | |
| ASTM D3359-74 | 0 | 5 | 5 | 5 | 4 | 5 | 5 |
| GM "X" Test | 0 | 10 | 10 | 10 | 10 | 10 | 10 |

Examples 30 and 31

Table VI identifies conductive coating formulations based on "ATLAC" 580-05, which is a commercially available vinyl-terminated polyester-urethane resin similar to that described in Example A above. They were prepared and molded as previously described and, after topcoating with standard automotive lacquer topcoats, were exposed for 9 months at an outdoor test fence in Florida. The topcoats used were

a) white, and

b) metallic blue

Adhesion, gloss and gravelometer (chip resistance) of these coatings is listed on Table VII.

Gravelometer data or chip resistance was measured according to test procedure SAE J-400 at -18°C and 60 psi air pressure. The panels were then rated according to General Motors Gravelometer Rating Standards. According to these, standard ratings of 1 to 3 are poor, 4 to 6 are fair and 7 to 9 are good.

After 9 months' Florida exposure, panels with the in-mold coatings show good gravelometer values, adhesion and gloss. A control without any in-mold coating has poor adhesion and chip resistance after 9 months' exposure.

Examples 32 and 33

Table VIII shows two conductive in-mold coating compositions with pigment concentrations of 20% and 25% respectively and coating properties.
Conductivity was measured with a Ransburg Sprayability Meter, Model 230. Readings of 65 to 90 indicate the surface cannot be topcoated electrostatically. Values of 100 to 105 indicate a sprayable surface.

TABLE VI

CONDUCTIVE IN-MOLD COATINGS FOR FLORIDA EXPOSURE

| | | |
|---|---|---|
| Example | 30 | 31 |
| Reference | 3812-147D | 3656-254C |
| "Atlac" 580-05 base resin | 60.0 | 60.0 |
| "Kelpoxy" G-270-100 epoxy copolymer | 5.0 | 15.0 |
| 10% Hydroquinone solution in acetone | 0.38 | 0.38 |
| 10% Lecithin solution in styrene | 4.0 | 4.0 |
| "Aerosil" R-972 colloidal silica | 0.2 | 0.2 |
| "Sylosiv" 120 zeolite molecular sieve | 1.0 | 1.0 |
| CX-72R electroconductive carbon black pigment | 2.0 | 2.0 |
| "Nytal" 300 magnesium silicate | 12.19 | 12.19 |
| Styrene | 15.23 | 5.23 |
| | 100.00 | 100.00 |
| USP-400P Peroxide catalyst | 1.0 | 1.0 |
| "Rubinate" M polyisocyanate | 5.0 | 5.0 |

TABLE VII

PROPERTIES OF IMC: ADHESION, GLOSS, AND GRAVELOMETER DATA, FLORIDA EXPOSURE

| Example | 30 | | 31 | | Control | |
|---|---|---|---|---|---|---|
| Reference | 3812-147D | | 3656-254C | | 3812-165 | |
| | White | Blue | White | Blue | White | Blue |
| Properties IMC Only | | | | | | |
| ASTM D3359-74 | 5* | | 5* | | - | |
| GM "X" Wt. | 10* | | 10* | | - | |
| Properties IMC & Topcoat | | | | | | |
| Initial | | | | | | |
| ASTM | 5 | 5 | 4-5** | 5 | 2-3** | 2-3** |
| GM "X" Wt. | 10 | 10 | 10 | 10 | 10 | 9 |
| % Gloss | 90 | 89 | 90 | 89 | 83 | 87 |
| 2 Month Florida | | | | | | |
| ASTM D3359-74 | 5 | 5 | 5 | 5 | 3-4 | 3-4 |
| GM "X" Wt. | 10 | 10 | 10 | 10 | 9 | 9 |
| % Gloss | 83 | 85 | 86 | 86 | 83 | 89 |
| 6 Month Florida | | | | | | |
| ASTM D3359-74 | 5 | 4-5 | 5 | 4-5** | 4-5 | 4-5 |
| GM "X" Wt. | 10 | 10 | 10 | 10 | 10 | 9 |
| % Gloss | 81 | 83 | 82 | 85 | 89 | 91 |
| 9 Month Florida | | | | | | |
| ASTM D3359-74 | 4-5 | 5 | 4-5 | 4-5 | 2 | 1 |
| GM "X" Wt. | 9 | 10 | 10 | 10 | 6 | 5 |
| % Gloss | 80 | 86 | 85 | 86 | 83 | 85 |
| SAE J-400 | 7-7-7-8 | 8-8-8-7 | 7-7-7-7 | 8-8-8-7 | 4-4-4-4 | 3-3-3-3 |

* Data on neat IMC without topcoat
** Pulls glass

TABLE VIII

CONDUCTIVE IMC AT HIGH PIGMENT CONCENTRATIONS

| | | |
|---|---|---|
| Example | 32 | 33 |
| Reference | 4135-51C | 4135-51E |
| "Atlac" 580-05 base resin | 60.0 | 57.0 |
| "Kelpoxy" G-272-100 epoxy copolymer | 10.0 | 10.0 |
| 10% Hydroquinone solution in acetone | 0.38 | 0.38 |
| 10% Lecithin solution in styrene | 4.0 | 4.0 |
| "Aerosil" R-972 colloidal silica | 1.0 | 1.0 |
| "Sylvosiv" 120 zeolite molecular sieve | 2.0 | 2.0 |
| CX-72R electroconductive carbon black pigment | 3.0 | 3.0 |
| "Nytal" 300 magnesium silicate | 13.0 | 18.0 |
| R-900 Titanium dioxide | 1.0 | 1.0 |
| Styrene | 2.62 | 0.62 |
| Trimethylolpropane triacrylate | 3.0 | 3.0 |
| | 100.00 | 100.00 |
| "Rubinate" M polyisocyanate | 5.0 | 5.0 |
| USP-400P peroxide catalyst | 2.0 | 2.0 |
| IMC Panel Properties | | |
| ASTM D3359-74 | 5 | 5 |
| GM "X" Cut | 10 | 10 |
| SAE J-400 (Gravelometer) | 8-8-8 | 7-8-8 |
| Conductivity | 150 | 165 |

WE CLAIM:-

1. An in-mold coating composition comprising:-
   (a) 5-94% by weight of an ethylenically unsaturated base resin free from groups which are reactive with an isocyanate, the base resin being selected from vinyl-terminated polyester-urethane resins, vinyl-terminated polyisocyanurate resins and ethylenically unsaturated polyester resins as hereinbefore defined and blends thereof;
   (b) 5-94% by weight of an ethylenically unsaturated monomer free from groups reactive with an isocyanate; and
   (c) 1-20% by weight of an organic compound containing free isocyanate groups or an organic compound which can undergo decomposition to form a compound containing free isocyanate groups.
2. A composition as claimed in claim 1, wherein the base resin (a) is a vinyl-terminated polyester-urethane resin which is the product of reaction of the maleate or fumarate of a polyoxyalkylene derivative of bisphenol A with a polyisocyanate and a hydroxyl-terminated ester of acrylic acid or methacrylic acid.
3. A composition as claimed in claim 1, wherein the base resin (a) is a vinyl-terminated polyisocyanurate resin obtained by reaction of an aromatic polyisocyanate with at least one vinylidene carbonyloxyalkanol and subsequent trimerization of the resulting isocyanate group-containing urethane.
4. A composition as claimed in any one of claims 1 to 3, wherein the ethylenically unsaturated monomer (b) is selected from vinyl acetate, methyl methacrylate, ethyl /methacrylate, n-propyl methacrylate, isopropyl methacrylate, n-butyl

methacrylate, isobutyl methacrylate, tert-butyl methacrylate, butyl acrylate, 2-ethylhexyl acrylate, glycidyl acrylate, styrene, α-methylstyrene, vinyltoluene, acrylonitrile and methacrylonitrile, glycol dimethacrylate, hexanediol diacrylate, neopentyl diol diacrylate, pentaerythritol triacrylate, trimethylolpropane triacrylate, and divinylbenzene.

5. A composition as claimed in any one of claims 1 to 4, wherein the compound (c) is a polyisocyanate selected from methylene-bis(4-cyclohexyl)isocyanate, isophorone diisocyanate, 1,3-phenylene diisocyanate, 1,4-phenylene diisocyanate, 4-methoxy-1,3-phenylene diisocyanate, 4-ethoxy-1,3-phenylene diisocyanate, 4,6-dimethyl-1,3-phenylene diisocyanate, 4-chloro-1,3-phenylene diisocyanate, 4-bromo-1,3-phenylene diisocyanate, 2,4-tolylene diisocyanate, 2,6-tolylene diisocyanate, 1,3-xylene-4,6-diisocyanate, 2,4'-diphenylether diisocyanate, 4,4'-diphenylether diisocyanate, 4,4'-diphenylmethane diisocyanate, dichlorodiphenylmethane diisocyanate, 4,4'-diisocyanatodiphenyl,3,3'-dimethyl-4,4'-diisocyanatodiphenyl, 3,3'-dimethoxy-4,4'-diisocyanatodiphenyl, 4,4'-benzophenone diisocyanate, 2,2-bis(4-isocyanatophenyl)propane, 4,4'-diisocyanatodibenzyl, 1,4-naphthalene diisocyanate, 1,5-naphthalene diisocyanate, 1,8-naphthalene diisocyanate, 9,10-anthracene diisocyanate, 2,4,6-tolylene triisocyanate, 2,4,4'-triisocyanatodiphenylmethane, 2,4,4'-triisocyanatodiphenylether, 4,4',4"-triphenylmethane triisocyanate, 2,2,4'-triisocyanatodiphenyl, and polymethylenepolyphenyl polyisocyanates.

6. A composition as claimed in any one of claims 1 to 5, which also contains a catalyst for the reaction between the base resin (a) and the monomer (b).

7. A composition as claimed in claim 6, wherein the catalyst is selected from benzoyl peroxide, cyclohexanone peroxide, di-tert-butyl peroxide, dicumyl peroxide, tert-butyl peroctoate, tert-butyl perbenzoate, 1,1-bis(tert-butylperoxy)-cyclohexane, 1,1-bis(tert-butylperoxy)-3,3,5-trimethylcyclohexane and 2,5-dimethyl-2,5-bis(ethylhexanoylperoxy)hexane.

8. A composition as claimed in claim 1 which comprises from 20% to 80% by weight of the base resin (a), from 30% to 60% by weight of the ethylenically unsaturated monomer (b) and from 2% to 15% by weight of the polyisocyanate (c).

9. A method of forming a coating upon a compression or injection molded, fully cured thermoset article by copolymerizing in contact with the said article a composition as claimed in any one of claims 1 to 8.

10. A molded, fully cured thermoset article having a surface coating derived from a composition as claimed in any one of claims 1 to 8.